Europäisches Patentamt

European Patent Office

Office européen des brevets

(19)

(11) Publication number: **0 418 812 A2**

# EUROPEAN PATENT APPLICATION

(21) Application number: 90117926.7

(22) Date of filing: **18.09.90**

(51) Int. Cl.⁵: **H04L 12/56,** H04L 12/66,
H04M 11/06

(30) Priority: **18.09.89 JP 241439/89**

(43) Date of publication of application:
**27.03.91 Bulletin 91/13**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Fujimoto, Akio**
**1-3-403, Edahigashi 3-chome**
**Midori-ku, Yokohama-shi, Kanagawa 227(JP)**
Inventor: **Shirai, Nobuo**
**Mogusa Danchi 274-201, 999, Mogusa**
**Hino-shi, Tokyo 191(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **A packet communication system using a telephone switching network and a data flow control method.**

(57) Data flow control applied to a packet communication system including data terminal equipments (DTEs), a first MODEM connected to one of DTEs, a telephone switching network (TSN) connected to the first MODEM, a packet switching network (PSN) having an assembly and disassembly equipment (PAD) and a second MODEM connected to PAD and provided between PAD and TSN and carried out by using MODEM control signals, logic signal "1" and "0", and control characters, DC1 and DC3, is performed by: discriminating a designated response signal, /REL in CONNECT $\alpha\beta\gamma\delta$/REL, from a header of data transferred through the first and second MODEMs each having a buffer memory used for error correction of the data; making the MODEM control signals effective and the control characters ineffective to be controlled when the designated response signal is detected; and making the MODEM control signals ineffective and the control characters effective when no designated response signal is detected, at PAD.

FIG. 4

# A PACKET COMMUNICATION SYSTEM USING A TELEPHONE SWITCHING NETWORK AND A DATA FLOW CONTROL METHOD

## BACKGROUND OF THE INVENTION

### Field of the Invention

The present invention relates to a packet communication system for performing packet data communication through the system including a packet switching network and a telephone switching network, and a data flow control method applied to the system.

### Description of the Related Art

Recently, a packet communication system is widely used in data communication because data transmitting lines are allowed to be used in high utility factor in the packet communication system.

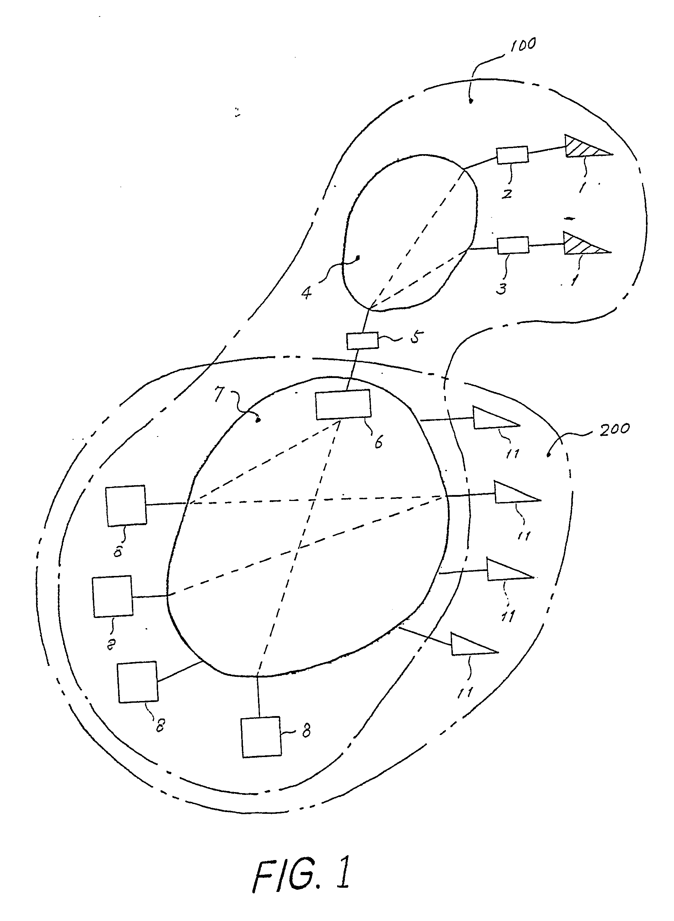

A typical packet communication system is schematically illustrated in Fig. 1, instancing a case that data are switched and transferred between a data terminal equipment 1 or 11 such as a personal computer and a host computer 8 in the packet communication system. Fig. 1 shows two cases of packet communication systems. One is a packet communication system 100 depicted by a one-dot dashed line enclosure and the other is a packet communication system 200 depicted by a two-dot dashed line enclosure.

The packet communication systems 100 and 200 include a packet switching network (PSN) 7 and a plurality of host computers (HC) 8 connected to PSN 7, respectively. The packet communication system 100 further includes an ordinary telephone switching network (TSN) 4 connected to PSN 7 and a plurality of data terminal equipments (DTE) 1 connected to TSN 4, however, the packet communication system 200 further includes a plurality of DTE 11 connected to PSN 7. Hereupon, DTE 11 is a packet mode DTE having an exclusive packet transmit-receive function, while DTE 1 is a non-packet mode DTE having no packet transmit-receive function. Since the packet communication system 100 includes TSN 4, a modulator and demodulator (MODEM) is necessary to be placed between DTE 1 and TSN 4 and between TSN 4 and PSN 7 respectively. A box having reference numeral 2 or 3 represents the former and a box having reference numeral 5 represents the latter. The packet communication system 200 may be an ideal system for packet communication. However, because of the development of data communication, TSN 4 and the usual non-packet mode DTEs 1 connected to TSN 4 must be allowed to be used in the packet communication system.

In the packet communication system 100, since DTE 1 has no packet transmit-receive function, a packet assembly and disassembly equipment (PAD) 6 is necessary to be provided in the packet communication system 100. In Fig. 1, PAD 6 is included in PSN 7. The PAD 6 is for packing data sent from a plurality of DTEs 1 into a packet by using a buffer memory provided in PAD 6 and for controlling the flow of data stored or to be stored into the buffer memory. This control is called a data flow control.

Generally, a telephone switching network generates error during switching, so that the error must be corrected. Recently, the error correction is performed at MODEMs placed across the telephone switching network. In Fig. 1, MODEMs 2 and 5 placed across TSN 4 have an error correction function respectively. However, actually, there is a case that the MODEM arranged between DTE and TSN has no error correction function. MODEM 3 in Fig. 1 is the MODEM having no error correction function.

Thus, the packet communication system 100 includes not only the ordinary TSN 4 but also many types of ordinary and new equipments connected to TSN 4, such as ordinary non-packet mode DTEs 1, new type MODEMs 2 and 5 having the error correction function and ordinary MODEM 3 having no error correction function. Therefore, for maintaining the packet communication system 100, many kinds of data flow control must be performed under various ordinary and new rules for these equipments. Accordingly, many problems about the data flow control occur in the packet communication system 100.

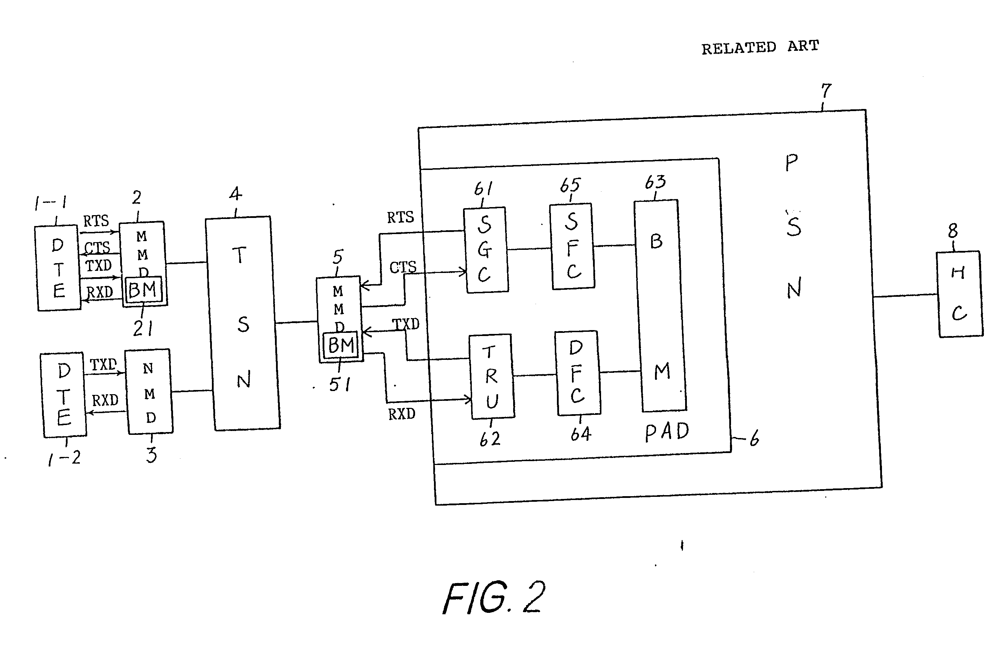

Fig. 2 shows a block diagram of the packet communication system 100 of the related art. In Fig. 2, the same reference numeral as in Fig. 1 designates the same network or equipment as in Fig. 1. Actually, a plurality of DTEs 1 are connected to TSN 4 and a plurality of HCs 8 are connected to PSN 7, however, Two DTEs 1 and one HC 8 are representatively depicted in Fig. 2. Therefore, the data flow control for data transmitted between one of DTEs 1 and HC 8 through TSN 4 and PSN 7 will be discussed in reference to Fig. 1. Since DTEs 1 are non-packet mode DTEs, it is required to provide a MODEM between respective DTE 1 and TSN 4, and the MODEM is separated into two kinds in accordance with whether MODEM has an error correcting function or not. Formerly the error correcting function has not been provided in MODEM, however, recently a MODEM having the error correcting function is produced as an article of commerce. For instance, a MODEM called "MNP", which is an abbreviation of Microcom Network Protocol, is a typical MODEM having the error correcting function. The MODEM called MNP is produced by MICROCOM Inc. in USA and MNP may be a registered tradename of MICROCOM Inc. MNP is intended to be a standard MODEM of CCITT, having the error correction function. When data are sent to MNP, MNP checks the data and corrects the error if there is an error in the data, producing a corrected data. Then, modulation is performed in MNP by using the corrected data and a modulated data is output from MNP. However, at the same time, the corrected data is stored in a buffer memory provided in MNP. The stored corrected data is used for being resent from MNP when MNP is required to resend the corrected data.

In Fig. 1 or 2, MNP is applied to MODEMs 2 and 5 respectively. Therefore, MODEM 2 or 5 will be called MMD (MNP Modulator Demodulator) 2 or 5 hereinafter. MMDs 2 and 5 have a buffer memory (BM) 21 and BM 51 respectively for storing the corrected data. On the other hand, MODEM 3 has no error correcting function, so that MODEM 3 has no buffer memory and will be called NMD (Not-MNP Modulator Demodulator) 3 hereinafter.

As shown in Figs. 1 and 2, PSN 7 includes PAD 6 for performing the data flow control, and as shown in Fig. 2, PAD 6 includes a buffer memory (BM) 63 for storing data to perform packet switching, and is connected to MMD 5.

In Fig. 2, though the functions of two DTEs 1 are same to each other, DTE 1 connected to MMD 2 and that connected to NMD 3 will be called DTE 1-1 and DTE 1-2 respectively hereinafter for the sake of the explanation of the packet communication system 100. In Fig. 2, when a data is sent from DTE 1-1 to PAD 6 or vice versa, the error correction is performed by MMDs 2 and 5 in cooperation. For instance, when a data is sent form DTE 1-1 to PAD 6 through MMD 2, TSN 4 and MMD 5, MMDs 2 and 5 check and correct errors as follows: MMD 2 checks whether there is an error in the data sent from DTE 1-1; if there is an error in the data, MMD 2 corrects the error, producing a corrected data; then MMD 2 outputs the corrected data and at the same time stores the corrected data into BM 21; when MMD 5 receives the data from MMD 2, MMD 5 checks whether there is another error in the data sent from MMD 2; if there is another error in the data sent from MMD 2 through TSN 4, MMD 5 asks MMD 2 for resending the correct data; then, MMD 2 resends the correct data; the above steps are repeated until the correct data is received at MMD 5; and when the correct data is received at MMD 5 from MMD 2, MMD 5 sends the correct data to BM 63 in PAD 6 and at the same time stores the correct data into BM 51. In the above, the steps of data correction are only described and the modulation and demodulation of data performed at MMDs 2 and 5 are omitted to be described. When data is sent from PAD 6 to DTE 1-1, the error correction is performed at MMDs 2 and 5 same as the above, using BMs 21 and 51 respectively.

In the error correction described above, when BM 63 in PAD 6 is in a state, which will be called a "not-full state" hereinafter, of having a room for storing data, the corrected data can be transferred to BM 63 from MMD 5 as mentioned above. However, when BM 63 is in a state, which will be called a "full state" hereinafter, of having no room for storing data, MMD 5 is stopped from transferring the corrected data to BM 63 until BM 63 becomes the not-full state. Same as the above, when BM 51 in MMD 5 becomes the full state, MMD 2 is stopped from transferring the corrected data to MMD 5 until BM 51 becomes the not-full state. Further, when BM 21 in MMD 2 becomes the full state, DTE 1-1 is stopped from transferring data to MMD 2 until BM 21 becomes the not-full state. In contrast with the above, when BM 51 is in the not-full state, a data stored in BM 63 is transferred to MMD 5. However, when BM 51 is in the full state, PAD 6 is stopped from transferring the data to MMD 5 until BM 51 becomes the not-full state. Same as the above, when BM 21 is in the full state, MMD 5 is stopped from transferring the data to MMD 2 until BM 21 becomes the not-full state.

In a case that a data is transferred from DTE 1-2 to BM 63 through NMD 3, TSN 4 and MMD 5, the data is directly transferred to BM 63, stopping MMD 5 from performing error correction by using BM 51. Because, NMD 3 has no error correcting function and no buffer memory. In this case, when BM 63 is in the full state, DTE 1-2 is stopped from sending data to BM 63.

The data transfer performed between DTE 1-1 and BM 63 or between DTE 1-2 and BM 63 as mentioned above is carried out by data flow control, and the data flow control is performed in accordance with various control procedures. For instance, the data flow control carried out between MMD 2 and MMD 5 is performed by a control procedure predetermined so as to be matched with the MODEM MNP, the data flow control carried out between MMD 5 and PAD 6 is performed by control signals, and the data flow control carried out between DTE 1-1 and MMD 2 is performed by control characters such as DC1 and DC3 of X.3 recommended by CCITT (the Consultative Committee of International Telegraph and Telephone).

In Fig. 2, symbols RTS and CTS are signal lines for transferring the control signals and symbols TXD and RXD are data lines on which the control characters are transferred with payload data. The data flow control performed by such control signals and characters will be detailed below in reference to Fig. 2.

As shown in Fig. 2, signal lines RTS (Request To Send) and CTS (Clear To Send) are provided between MMD 5 and PAD 6 and between MMD 2 and DTE 1-1. These signal lines are used for transferring control signals. For instance, when BM 63 in PAD 6 becomes the full state because of data sent from MMD 5 through a data line RXD (Received Data), PAD 6 sends a control signal of logic "0" to MMD 5 through RTS so as to stop MMD 5 from sending data to BM 63, and when BM 63 becomes the not-full state, PAD 6 sends a control signal of logic "1" to MMD 5 through RTS so as to make MMD 5 start to send data to BM 63 through RXD. Same as the above, when BM 51 in MMD 5 becomes the full state because of data sent from PAD 6 through a data line TXD (transmitted Data), MMD 5 sends a control signal "0" to PAD 6 through CTS so as to stop PAD 6 from sending the data to MMD 5, and when BM 51 becomes the not-full state, MMD 5 sends a control signal "1" to PAD 6 through CTS so as to make PAD 6 start to send the data to MMD 5 through TXD.

The data flow control performed thus between DTE 1-1 and MMD 2 is carried out by either the control characters such as DC1 and DC3 or the same control signals as those used in the data flow control between MMD 5 and PAD 6.

In case of transferring data from DTE 1-2 to PAD 6 through NMD 3, TSN 4 and MMD 5, it is not necessary to carry out data flow control between DTE 1-2 and NMD 3, NMD 3 and MMD 5, and MMd 5 and PAD 6 individually. The data flow control between DTE 1-2 and PAD 6 is carried out only by the control characters DC1 and DC3, which is predesignated by either DTE 1-2 or HC 8. For instance, when BM 63 becomes the full state because of data transferred from DTE 1-2, PAD 6 sends DC3 to DTE 1-2 through TXD connecting PAD 6 with MMD 5, MMD 5, TSN 4, NMD 3 and TXD connecting NMD 3 with DTE 1-2, for stopping DTE 1-2 from sending data to PAD 6, and when BM 63 becomes the not-full state, PAD 6 sends DC1 to DTE 1-2 through the same path as the above for making DTE 1-2 start to send data to PAD 6.

As shown in Fig. 2, PAD 6 is consisted of: a control signal transmit-receive controller (SGC) 61 for controlling a transmit-receive function of control signals transferred between PAD 6 and MMD 5 through CTS and RTS respectively; a data transmit-receive unit (TRU) 62 for sending and receiving the payload data with the control characters, between PAD 6 and MMD 5 through TXD and RXD respectively; a buffer memory (BM) 63 for storing data so as to form a packet; a data flow controller (DFC) 64 operating with control characters, which is for counting a quantity of storing data into BM 63 and making TRU 62 send the control character such as DC1 or DC3 to MMD 5 through TXD, together with the payload data sent from TRU 62; and a data flow controller (SFC) 65 operating with control signals, which is for counting a quantity of storing data into BM 63 and making SGC 61 send the control signal "0" or "1" to MMD 5 through RTS and for discriminating the control signal "0" or "1" received from MMD 5 through CTS and SGC 61 and making TRU 62 control the transmission of data to be sent to MMD 5 through TXD.

However, when PAD 6 is used in the packet communication system 100 shown in Fig. 2, there have been problems about the data flow control stated above.

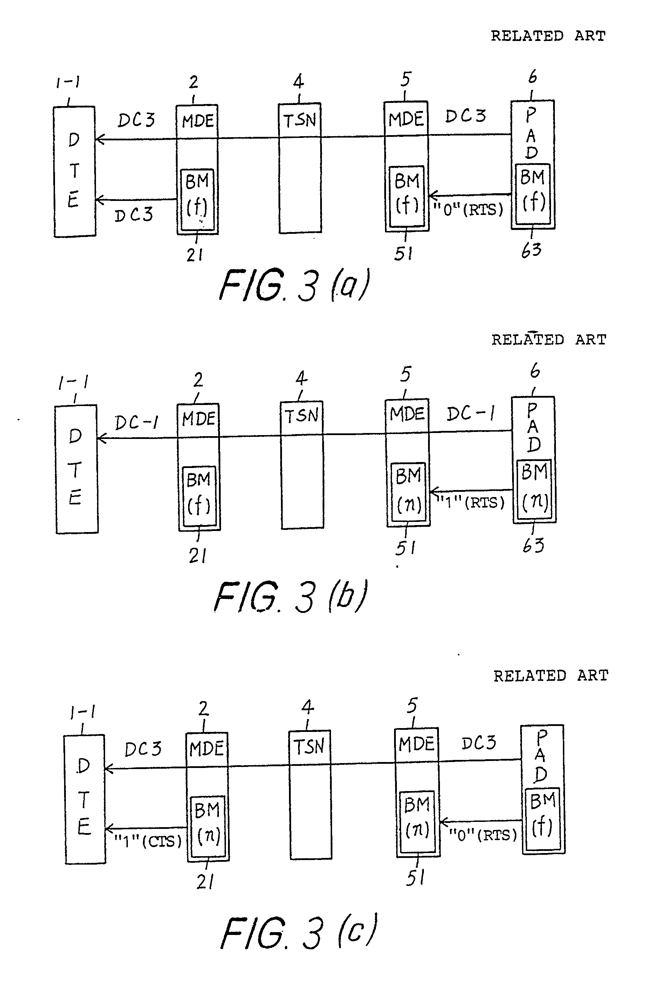

In Fig. 2, when PAD 6 is connected with DTE 1-1 through MMD 5, TSN 4 and MMD 2, problems occur as will be explained below in reference to Figs. 3(a), 3(b) and 3(c). In Figs. 3(a), 3(b) and 3(c), the same reference numeral as in Fig. 2 designates the same equipment or network as in Fig. 2, and reference symbols "f" and "n" represent the full state and the not-full state of the buffer memory respectively.

When, as shown in Fig. 3(a), data flow control is performed respectively between DTE 1-1 and MMD 2 by the control characters DC1 and DC3, between MMD 2 and MMD 5 by the predetermined procedure matched to MNP MODEM as described before and between MMD 5 and PAD 6 by the control signals "1" and "0", and furthermore when data flow control is performed between DTE 1-1 and PAD 6 by the control characters DC1 and DC3 and DTE 1-1 is preset so as to be controlled only by the control characters DC1 and DC3, the following problem (first problem) occurs.

First problem: When BM 63 is in the full state, therefore, BM 51 and BM 21 become the full state successively, DTE 1-1 is controlled so as not to send data to MMD 2, by the control character DC3 sent from MMD 2. After that, when BM 63 becomes the not-full state, SFC 65 in PAD 6 detects the not-full state of BM 63 and makes SGC 61 in PAD 6 send a control signal "1" to MMD 5 through RTS and at the same time DFC 64 in PAD 6 detects the not-full state of BM 63 and makes TRU 62 in PAD 6 send a control character DC1 to DTE 1-1 through TXD, MMD 5, TSN 4, MMD 2, as shown in Fig. 3(b). However, since DC1 is arrived at DTE 1-1 earlier than that BM 21 in MMD 2 becomes the not-full state because of the control signal "1" applied to MMD 5 from PAD 6, data are sent from DTE 1-1 to MMD 2 though BM 21 is in the full state. This produces a problem (first problem) that the data sent from DTE 1-1 to MMD 2 are annulled.

When, as shown in Fig. 3(C), PAD 6 is connected to DTE 1-1 through MMD 5, TSN 4 and MMD 2, and when data flow control is performed between DTE 1-1 and MMD 2 by the control signals "1" and "0", between MMD 2 and MMD 5 by the predetermined procedure matched to MNP MODEM as described before and between MMD 5 and PAD 6 by the control signals "1" and "0", and furthermore when data flow control is performed between DTE 1-1 and PAD 6 by DC1 and DC3 and DTE 1-1 is preset so as to be controlled only by the control signals "1" and "0", the following problem (second problem) occurs:

Second problem: When BM 63 and therefore BMs 51 and 21 are in the not-full state, MMD 2 sends the control signal "1" to DTE 1-1, so that DTE 1-1 sends data to MMD 2. Then, when BM 63 becomes the full state, SGC 61 sends the control signal "0" to MMD 5 and TRU 62 sends the control character DC3 to DTE 1-1. However, DTE 1-1 continues to send data to MMD 2 even though PAD 6 sends DC3 to DTE 1-1 because DTE 1-1 has been preset so as to be controlled only by the control signals "1" and "0", which results in producing a problem (second problem) that DC3 is nulled, so that DTE 1-1 results in performing invalid operation.

As seen from the above, PAD 6 has two functions one of which is for producing the control signals "1" and "0" and the other of which is for producing the control characters DC1 and DC3. As a result, the data flow control based on the control signals "1" and "0" and that based on the control characters DC1 and DC3 are affected to each other in the packet communication system 100, producing the problems that the data flow control cannot be performed normally and correctly.

## SUMMARY OF THE INVENTION

Therefore, an object of the present invention is to stop the occurrence of infection happening due to an interaction between the control signal and the control character during the data flow control is performed by using these signal and character in the packet communication system including TSN.

Another object of the present invention is to increase reliability of performing the data flow control in the packet communication system.

The above objects are achieved by providing means called a classified link discriminator (CLD) to PAD in PSN. When MODEMs provided between DTE and TSN and between TSN and PAD are both MNP MODEMs (MMDs), the data flow control required between both MMDs is performed in accordance with the designated procedure matching to the error correction. When such data flow control is performed between MMDs, a signal CONNECTION $\alpha\beta\gamma\delta$/REL, e.g. CONNECTION 2400/REL, is added to a header and sent to PAD with the data (payload data). Wherein, CONNECT $\alpha\beta\gamma\delta$/REL is a kind of AT command used to MODEM, developed by a USA company and now becomes the standard in the art, and $\alpha\beta\gamma\delta$ indicates the communication speed so that 2400 indicates the communication speed of 2400 bps. When PAD receives the data, a part of the data is sent to CLD at which the data is checked whether the signal CONNECT 2400/REL in particular a signal REL is included in the data. When REL is discriminated from the data at CLD, CLD judges that the link for carrying out the error correction and the data flow control under the MNP procedure has been established between MMDs. Then, CLD controls DFC and SFC in PAD so that DFC is ineffective and SFC is effective. As a result, only the control signals such as "1" and "0" are used for the data flow control in the packet communication system. Consequently, the problems of the data flow control due to the interaction between the control signal and the control character can be avoided occurring. Incidentally, when MODEM provided between DTE and TSN is not MMD, in other word, the MODEM is ordinary MODEM having no error correction, the signal REL cannot be discriminated from the data at CLD. As a result, CLD controls DFC and SFC so that PAD controls the data flow in the packet communication system only by the control character such as CD1 and CD3. Consequently, the data flow control can be performed normally in the system when the MODEM provided between DTE and TSN has no error correction function.

## BRIEF DESCRIPTION OF THE DRAWINGS

Fig. 1 is an schematic block illustration showing typical packet communication systems one of which relates to the present invention;

Fig. 2 is a schematic block diagram of a packet communication system of the related art;

Fig. 3(a) is an illustration showing the data flow control of the related art;

Fig. 3(b) is another illustration showing the data flow control of the related art;

Fig. 3(c) is still another illustration showing the data flow control of the related art;

Fig. 4 is a schematic diagram of a packet communication system showing a principle of the present invention;

Fig. 5 is a schematic block diagram of a packet communication system including PAD embodying the present invention;

Fig. 6(a) is a sequence chart of the data flow control of the related art, performed in the packet communication system;

Fig. 6(b) is a sequence chart of the data flow control embodying the present invention, performed in the packet communication system;

Fig. 7(a) is a sequence chart of other data flow control of the related art, performed in the packet communication system;

Fig. 7(b) is a sequence chart of the data flow control further embodying the present invention, performed in the packet communication system;

Fig. 8 is a block diagram of PAD embodying the present invention;

Fig. 9 is a flow chart showing the flow of control signals and characters in PAD shown in Fig. 8;

Fig. 10(a) is a flow chart showing how PAD operates to control the control signals;

Fig. 10(b) is a flow chart showing how PAD operates to control MMD 5 by using the control signals;

Fig. 11(a) is a flow chart showing how PAD operates to control the control characters; and

Fig. 11(b) is a flow chart how PAD operates to controll DET by using the control characters.

## DESCRIPTION OF THE PREFERRED EMBODIMENTS

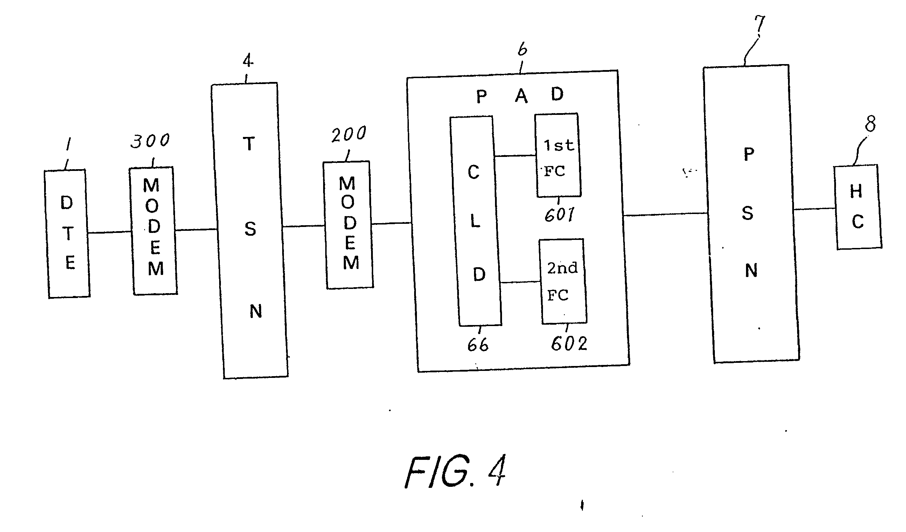

Fig. 4 is a schematic block diagram of a packet communication system for explaining a principle of the present invention. In Fig. 4, the same reference numeral as in Fig. 2 designates the same equipment or network as in Fig. 2, and a box 1 is a DTE represents DTEs 1-1 and 1-2 in Fig. 2, a box 300 is a MODEM represents MMD 2 and NMD 3 in Fig. 2 and a box 500 is a MODEM provided between DTE and TSN equal to MMD 5 in Fig. 2. Therefore, the same packet communication system 100 as in Fig. 2 is shown in Fig. 4. However, in accordance with the present invention, a method for performing the data flow control is improved in the packet communication system in Fig. 4, and means 66 called a classified link discriminator (CLD) is newly provided in PAD 6 for performing the invented method. In Fig. 4, PAD 6 is placed between MODEM 500 and PSN 7 separately from PSN 7, however, this does not make any difference in principle from PAD 6 included in PSN 7 as shown in Fig. 2. In PAD 6, a box 601 is first flow control means (1st FC) which represents means for performing the function of SFC 65 with SGC 61 in Fig. 2 and a box 602 is second flow control means (2nd FC) which represents means for performing the function of DFC 64 with TRU 62 in Fig. 2.

As described before, the first FC 601 controls the flow of data transferred between DTE 1 and PAD 6 by using the control signals such as logic "1" and "0", and the second FC 602 controls the same data flow as the above, however, by using the control characters such as DC1 and DC2. The CLD 66 newly provided in PAD 6 is for discriminating whether data flow control is performed between MODEMs 300 and 500. If the data flow control is performed between MODEMs 300 and 500, the data flow is performed by predetermined procedure matched to MODEMs 300 and 500 as stated above. For instance, when MNP is applied to MODEMs 300 and 500 same as MMDs 2 and 5 in Fig. 2, the data flow control is performed with the procedure matched to the MNP. Hereupon, it must be noted that the data flow control is required only in case that the MODEMs are special types such as MNP MODEMs requiring send and receive of data between the MODEMs for performing error correction. When CLD 66 discriminates that data flow control is performed between MODEMs 300 and 500, CLD 66 makes the first FC 601 effective and the second FC 602 ineffective, and when CLD 66 discriminates that data flow control is not performed between MODEMs 300 and 500, CLD 66 makes the first FC 601 in effective and the second FC 602 effective. Therefore, if MMDs 2 and 5 are applied to MODEMs 300 and 500 respectively as in Fig. 2, CLD 66 discriminates the data flow control performed between MODEMs 300 and 500 and makes the first FC 601 and the second FC 602 effective and ineffective respectively, so that the control characters such as DC1 and DC3 are stopped from being output from PAD 6. As a result, the problem explained in reference to Figs. 3(b) and 3-(c) can be avoided occurring.

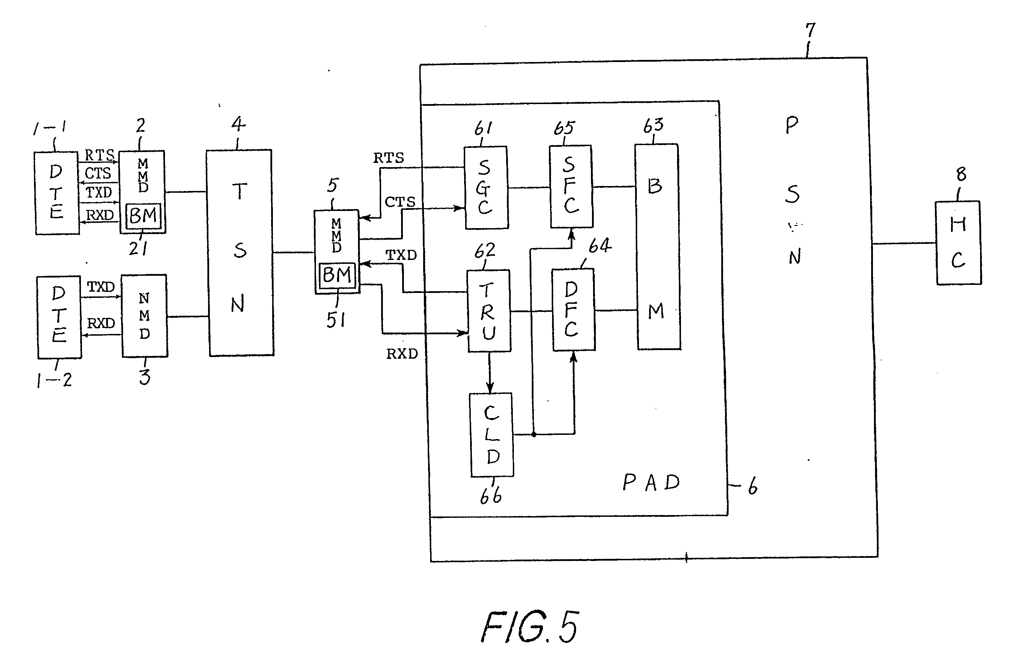

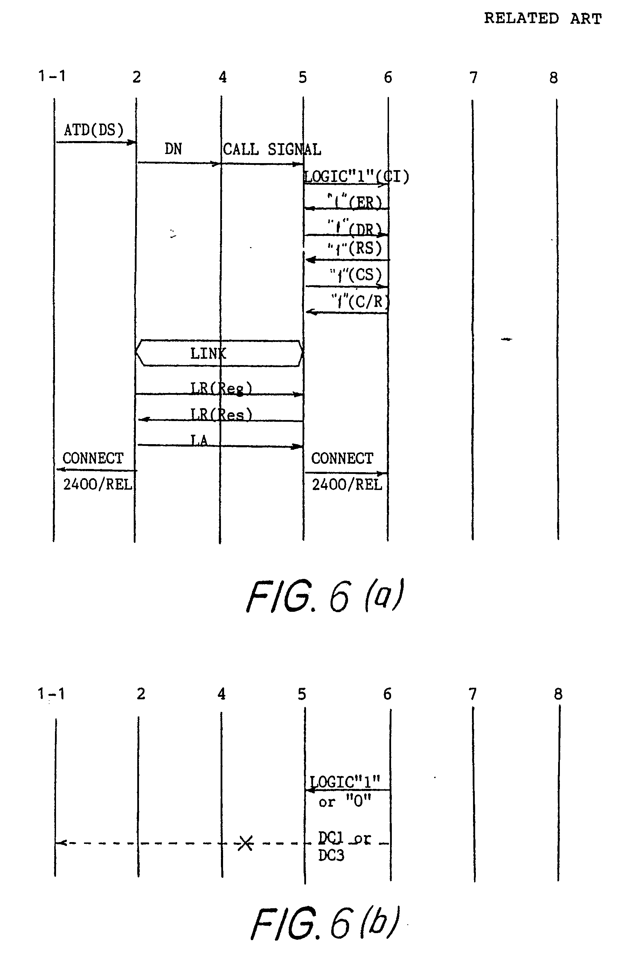

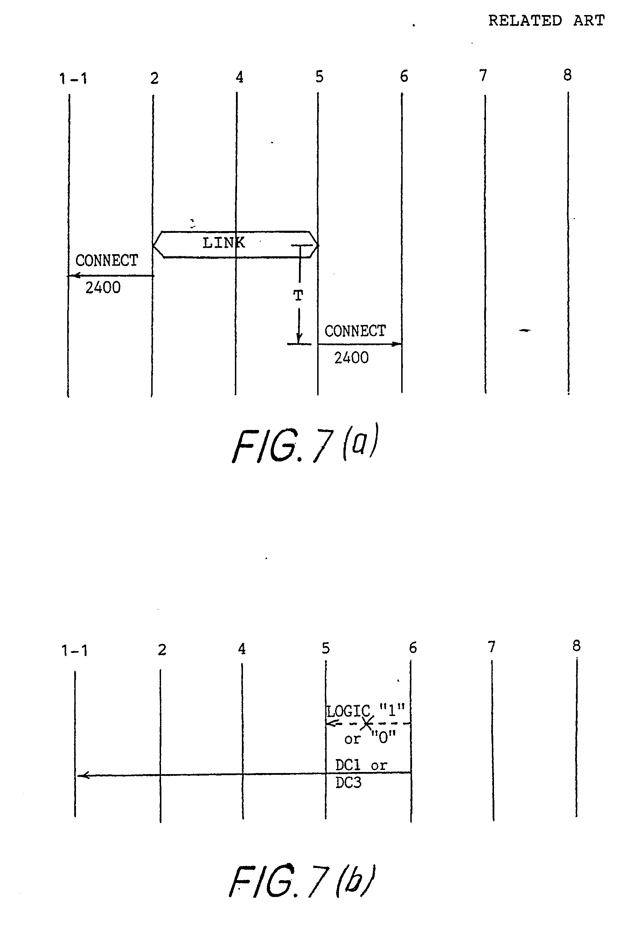

The preferred embodiment of the present invention will be explained in reference to Fig. 5, Figs. 6(a) and 6(b) and Figs. 7(a) and 7(b). Fig. 5 is a schematic block diagram of the packet communication system 100 to which a data flow controlling method embodying the present invention is applied. In Fig. 5, the same reference numeral as in Fig. 2 designates the same equipment or network as in Fig. 2. Fig. 6(a) is a sequence flow chart for the data transfer performed with flow control of the related art, when MMD 2 is used in Fig. 5. Fig. 6(b) is a sequence flow chart, in the same case as in Fig. 6(a), for the control signal transfer performed in the packet communication system 100 in Fig. 5, in accordance with the present invention. Fig. 7(a) is an end part of a sequence flow chart for the data transfer performed with flow control of the related art, when NMD 3 is used in Fig. 5. Fig. 7(b) is a sequence flow chart, in the same case as in Fig. 7-(a), for the control character transfer performed in the packet communication system 100 in Fig. 5, in accordance with the present invention. In Figs. 6(a) and 6(b) and Figs. 7(a) and 7(b), the same reference numeral as in Fig. 5 designates the same equipment or network as in Fig. 5.

In accordance with a well known sequence, a data link is established between MMDs 2 and 5 as will be described below in reference to Fig. 6(a): DTE 1-1 sends a dial command ATD(DS), which is also a kind of AT command, including a dialing number (DN) to MMD 2, then MMD 2 calls TSN 4 by DN for PAD 6; when TSN 4 receives DN, TSN 4 selects PAD 6 by a well known switching method and sends a call signal to MMD 5; when MMD 5 receives the call signal, MMD 5 performs the send-receive of logic "1" signals with PAD 6 through signal lines C1 (Calling Indicator), DTR (Data Terminal Ready), DSR (Data Send Ready), RTS (Request To Send) and CTS (Clear To Send) by a well known method, wherein the signal lines C1, DTR and DSR are well known, so that they are not depicted in Fig. 5; and an answer signal ATA(C/R), which is also a kind of AT command, is replied to MMD 5 from PAD 6, so that a data link is established between MMDs 2 and 5 through TSN 4. A word LINK written between lines 2 and 5 in Fig. 6-(a) represents that the data link is established between MMDs 2 and 5.

When the data link is established between MMDs 2 and 5 thus, MMD 5 stands by for receiving a well known LR(Req) signal from MMD 2 within designated time (T). While, after the data link is established between MMDs 2 and 5, MMD 2 sends the LR(Req) signal to MMD 5. Then, MMD 5 sends back the LR(Res) signal to MMD 2. When MMD 2 receives the LR(Res) signal from MMD 5, MMD 2 sends a well known LA signal to MMD 5 and a well known CONNECT 2400/REL signal to DTE 1-1 at the same time, wherein "/REL" in CONNECT 2400/REL is a signal for informing that a link for error correction and flow control is established.

When the LR(Req) signal is sent to MMD 5 within T, the LR(Res) signal and the LA signal are transferred between MMDs 2 and 5 as stated above, and at the same time MMD 5 sends the CONNECT 2400/REL signal to PAD 6 with data (payload data).

As noted in Fig. 6(a), the sequence for establishing the data link between MMDs 2 and 5 and the sequence for sending CONNECT 2400/REL signals from MMD 2 to DTE 1-1 and from MMD 5 to PAD 6 are the related art.

When data sent from MMD 5 is arrived at PAD 6 and passed through TRU 62 in PAD 6, the data is sent to DFC 64, however, separated at TRU 62 so as to be sent to CLD 66. Then, the data is checked at CLD 66 whether the data includes CONNECT 2400/REL, in particular, whether REL is included in the data. When CLD 66 discriminates the CONNECT 2400/REL signal from the data, CLD 66 judges that the link for carrying out the error correction and the flow control under the MNP procedure has been established between MMDs 2 and 5, so that CLD 66 sends an ineffective signal to DFC 64 for stopping DFC 64 from operating and an effective signal to SFC 65 for leaving SFC 65 operating. As a result, DFC 64 stops the send-receive operation of DC1 and DC3 and SFC 65 operates normally so as to perform the send-receive operation of the control signals "1" or "0" for carrying out the data flow control between PAD 6 and MMD 5 and between MMD 2 and DTE 1-1. In this case, even though the data flow control is performed between DTE 1-1 and MMD 2 by using either the control characters DC1 and DC3 or the control signals "1" and "0", it never happens that the control characters DC1 and DC3 transferred from PAD 6 are used for controlling data between DTE 1-1 and MMD 2, which is shown in Fig. 6(b). In Fig. 6(b), the same reference numeral as in Fig.6(a) designates the same equipment or network as in Fig. 6(a), and a sequence of sending DC1 or DC3 is denied by depicting a dotted arrow line having an "x" mark on it. As a result, the problems explained in reference to Figs. 3(a), 3(b) and 3(c) can be solved by introducing CLD 66 to PAD 6.

Hereupon, the CONNECT 2400/REL signal is generally placed at a header of a data format and payload data follow the header after time (first time) passes. On the other hand, in CLD 66, time (second time) is required to discriminating the CONNECT 2400/REL signal from the data and producing the effective and the ineffective signal. However, since the second time is very shorter than the first time, it is not necessary to consider that SFC 65 and DFC 64 operate with the CONNECT 2400/REL signal before the effect and the ineffect signal are applied to SFC 65 and DFC 64 respectively.

Next, a case of connecting DTE 1-2 with to PAD 6 though NMD 3, TSN 4 and MMD 5 in the packet communication system 100 will be described below in reference to Fig. 5 and Figs. 7(a) and 7(b).

When DTE 1-2 sends a dial command ATD-(DN) to NMD 3 for connecting with PAD 6, a link is established between NMD 3 and MMD 5 as shown by LINK in Fig. 7(a) in accordance with the same sequence as in the case described in reference to Fig. 6(a). When the link is established between NMD 3 and MMD 5, NMD 3 sends a CONNECT 2400 signal to DTE 1-2. On the other hand, MMD 5 stands by for receiving a LR(Req) signal from NMD 3 in a designated time (T). However, since NMD 3 does not send the LR(Req) signal to MMD 5, MMD 5 sends the CONNECT 2400 to PAD 6 with data (payload data) after the designated time T has passed.

In PAD 6, CLD 66 checks whether REL is included with the data and judges that a link of performing the error correction and the data flow control associated with the error correction based on the MNP procedure is not established between NMD 3 and MMD 5. Then, CLD 66 outputs an effective signal to DFC 64 and an ineffective signal to SFC 65 so that DFC 64 operates and SFC 65 does not operate. As a result, DFC 64 performs the send-receive operation of the control characters DC1 and DC3 between PAD 6 and DTE 1-2, and SFC 65 never performs the data flow control under the control signals such as logic "1" as shown in Fig. 7(b). Therefore, though the present invention is applied to the packet communication system 100, the data flow control can be performed by using the control characters normally.

For suggesting information, when binary data other than characters, such as programs are transferred from DTE 1-2 to PAD 6 in the packet communication system 100 in Fig. 5, it is possible that the same data as DC1 and DC3 are included in the transferring data, so that it must be considered that false data flow control would be performed. Therefore, in this case, the data flow control due to DC1 and DC3 is stopped from functioning by making DTE 1-2 or HC 8 send a proper stop command to PAD 6.

For further information regarding the binary data, when the present invention is applied to the packet communication system 100 as shown in Fig. 5, since the data flow control is performed by the control signals, in particular, using the signal lines RTS and CTS provided between DTE 1-1 and MMD 2, it is not necessary to make DTE 1-1 or HC 8 send the stop command to PAD 6 for stopping the data flow control due to the control characters DC1 and DC3 from performing.

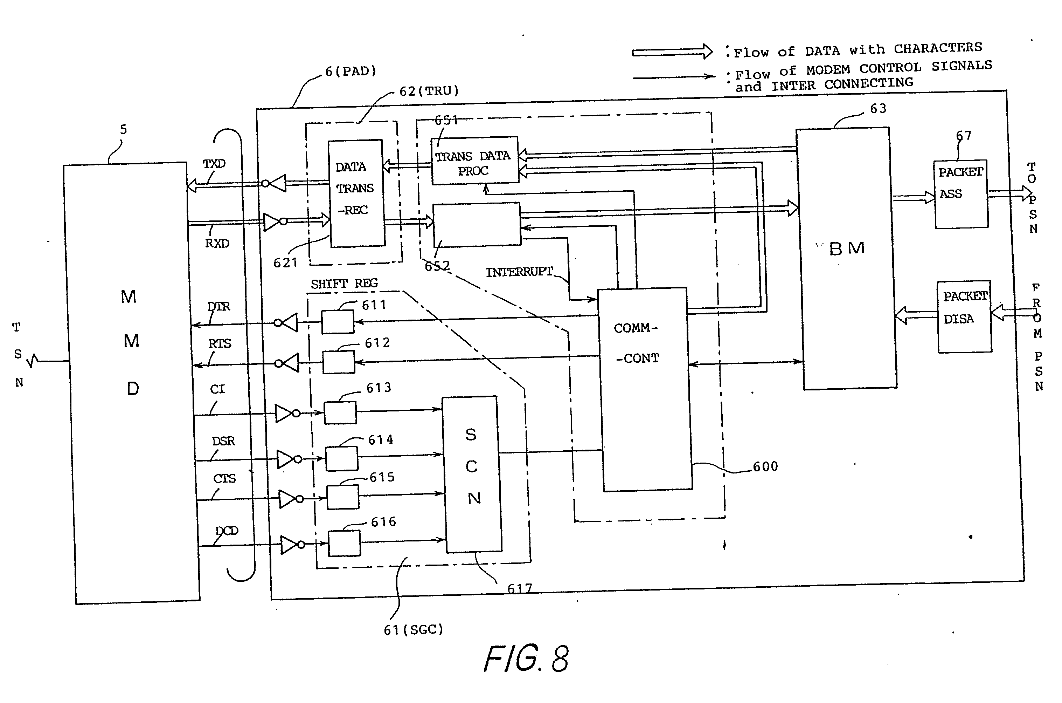

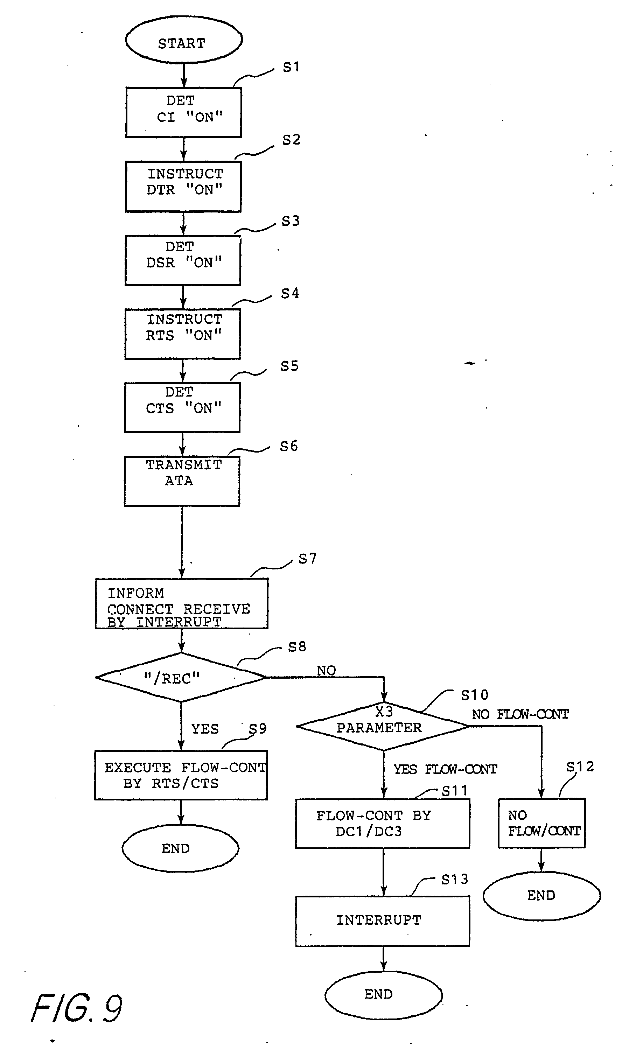

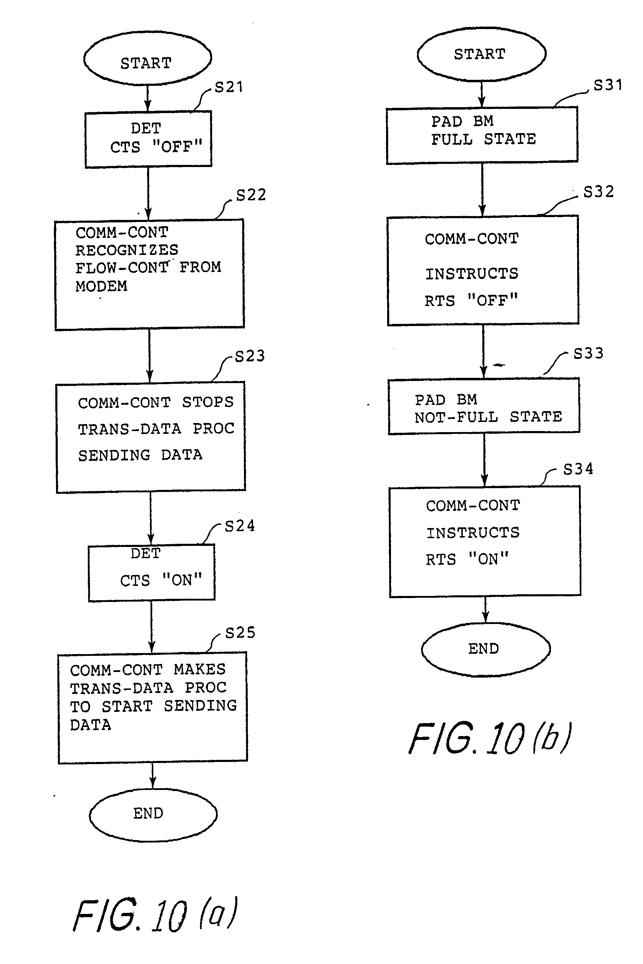

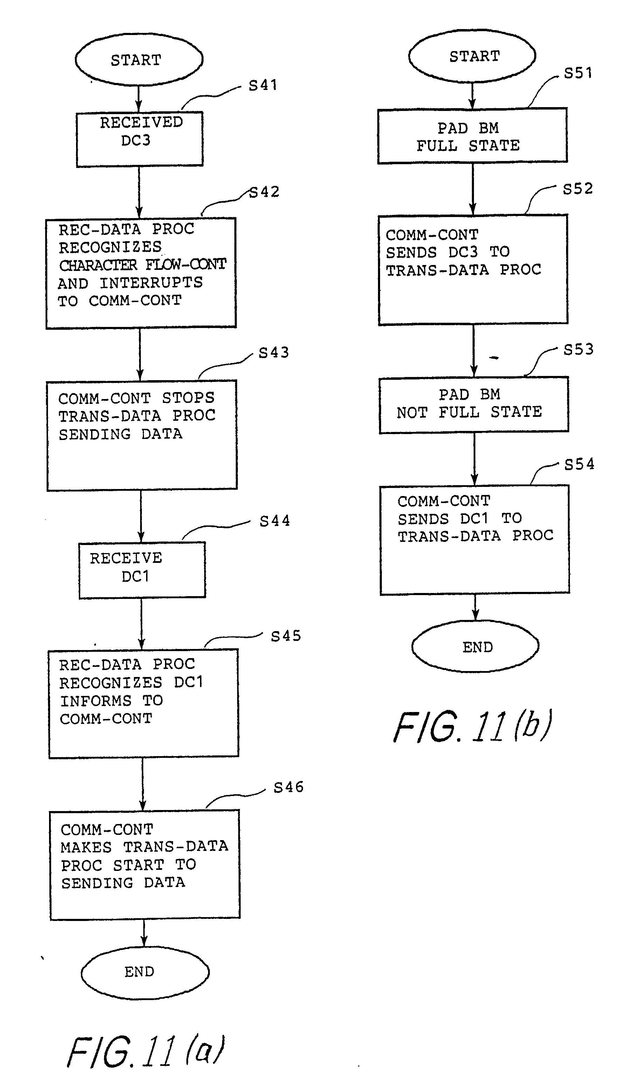

The concrete constitution of PAD 6 including the present invention will be explained in reference to Fig. 8, showing a further detailed block diagram of PAD 6. The data flow control performed in Fig. 8 will be explained in reference to a flow chart Fig. 9. The data flow control due to the control signals transferred between PAD 6 and MMD 5 will be explained in reference to flow charts in Figs. 10(a) and 10(b), and the data flow control due to the control characters transferred between PAD 6 and DTE (1-1 or 1-2 in Fig. 5) will be explained in reference to flow charts in Figs. 11(a) and 11(b). In Fig. 8, the same reference numeral or symbol as in Fig. 5 designates the same equipment or network as in Fig. 5.

In Fig. 8, the line TXD for transferring data transmitted from PAD 6 to DTE and the line RXD for receiving data sent from DTE to PAD 6 are provided between PAD 6 and MMD 5 as stated before in reference to Fig. 5. Further the above, there are lines between PAD 6 and MMD 5 for controlling MMD 5 from PAD 6 and for obtaining information on MMD 5, at PAD 6. That is, the following lines are obtained between PAD 6 and MMD 5: a line DTR (DATA TERMINAL READY) for sending a start signal (of PAD 6) from PAD 6 to MMD 5; a line RTS (REQUEST TO SEND) for sending a request signal (to MMD 5) from PAD 6 to MMD 5; a line CI (CALLING INDICATOR) for sending a signal informing that PAD 6 becomes in so called the "call in" state; a line DSR (DATA SET READY) for sending a signal informing that MMD 5 is in a ready state; a line CTS (CLEAR TO SEND) for sending a signal informing that MMD 5 is capable of sending data; and a line DCD (DATA CHANNEL RECEIVED LINE SIGNAL DETECTOR) for sending a signal informing that MMD 5 detects the carrier from MMD 2 or NMD 3 are provided.

In PAD 6, TXD and RXD are connected to a data transmit-receive unit 621 provided in TRU 62. To control the signals on DTR, RTS, CI, DSR, CTS and DCD mentioned above, write registers 611 and 612 and read registers 613, 614, 615 and 616 are provided respectively, and CI, DSR, CTS and DCD are connected to a scanner (SCN) 617 through the registers 613, 614, 615 and 616 respectively.

The treatments for transferring data from PAD 6 through TXD and for transferred data to PAD 6 through RXD are performed by a transmitting data processing unit 651 and a received data processing unit 652 respectively. The unit 651 reads data from BM 63 and sends the read data to the data transmit-receive unit 621. The unit 652 performs character handling to the received data sent from the data transmit-receive unit 621, for discriminating characters from the received data one by one. After the character handling is over, the unit 652 sends the received data to BM 63 with the characters.

The control of MMD 5 is performed by a communication control unit 600 in PAD 6. That is, ON-OFF instructions generated at the communication control unit 600 are applied to DTR and RTS through the write registers 611 and 612 respectively. The state of MMD 5 is judged at the unit 600, receiving the state information on MMD 5 through SCN 617.

As shown in Fig. 8, a packet assembly interface 67 and a packet disassembly interface 68 are provided between BM 63 and PSN 7. The packet assembly interface 67 is for assembling data read out from BM 63 into a packet and sending the packet to PSN 7, and the packet disassembly interface 68 is for disassembling a packet data sent from PSN 7 into start-stop mode data (non packet mode data) and sending the start-stop mode data to BM 63. Therefore, it is necessary to observe a full situation of memories in BM 63. If data are sent to BM 63 being in the full state, it would be happened to abandon the data. The communication control unit 600 performs the observation of the state (full state and not-full state) of BM 63.

Incidentally, the communication control unit 600 is farmware constructed in consideration of CLD 66, DFC 64 and SFC 65 in Fig. 5. Concretely saying, each of CLD 66, DFC 64 and SFC 65 in Fig. 5 includes a central processing unit (CPU) and a memory (MEM) so that CLD 66, DFC 64 and SFC 65 operate under program control. That is, CLD 66, DFC 64 and SFC 65 in Fig. 5 are equal to a group consisting of the communication control unit 600, the transmitting data processing unit 651 and the received data processing unit 652 and operating under program control. This will be explained in reference to Figs. 10(a) and (b) and Figs. 11(a) and (b).

In Fig. 8, the data flow control of the present invention is performed as follows:

when a communication route is established between PAD 6 and DTE, before executing the communication, the received data processing unit 652 checks by which the data flow control for the communication route is performed, by the control signals, which will be called "MODEM control signals" hereinafter, or by the control characters, and informs the checked results to the communication control unit 600 through an interruption line (INTERRUPT); and

the communication control unit 600 judges from the checked results that which data flow control should be performed to the communication route, the data flow control due to the MODEM control signals or that due to the control characters.

When PAD 6 receives data from TSN 4 (refer Fig. 5), PAD 6 operates as shown by the flow chart in Fig. 9.

The communication control unit 600 recognizes that PAD 6 becomes a "call in" state from information that the signal on CI becomes ON, given through SCA 617 (step 1: S1). Then, the unit 600 issues an instruction to set the signal on DTR ON (S2) and waits until the signal on DSR becomes ON. When the unit 600 detects that the signal on DSR becomes ON (S3), the unit 600 outputs an instruction to set the signal on RTS ON and waits until the signal on CTS becomes ON.

When the communication control unit 600 detects that the signal on CTS becomes ON (S5), the unit 600 recognizes that data can be sent out from PAD 6. Then the unit 600 sends ATA command to TXD (S6) through the transmitting data processing unit 651. As a result, the connection for transferring data between MODEMs facing each other with TSN 4 is established, and a connection complete signal (CONNECT) is output from the MODEM (MMD 5).

Then, when the received data processing unit 652 receives CONNECT, the unit 652 teaches the communication control unit 600 that the unit 652 received CONNECT through INTERRUPT (S7) and discriminate whether a signal "/REL" is included in CONNECT (S8). Wherein, "/REL" is a signal informing that data flow control is performed between MODEMs through TSN 4 independently from the data flow control due to PAD 6.

When "/REL" is included in CONNECT, the communication control unit 600 performs the data flow control by using the MODEM control signals transferred through RTS and CTS (S9). If "/REL" is not included in CONNECT, the unit 600 judges that the data flow control for the communication route should be performed in accordance with X.3 parameter recommended by CCITT, then the unit 600 checks whether the X.3 parameter given to PAD 6 is a parameter having a value allowing to perform the flow control or a value not allowing to perform the flow control (S10). When the unit 600 judges that the data flow control is performed because the X.3 parameter is the value of performing the flow control, the unit 600 determines that the data flow control is performed by DC1/DC3 in the communication route (S11), and the unit 600 sends instructions to the received data processing unit 652 so that the unit 652 receives DC1/DC3. Then, the unit 652 receives DC1/DC3, treating DC1/DC3 as the control characters, and sends a fact that the unit 652 receives DC1/DC3, to the unit 600 through INTERRUPT (S13).

Incidentally, when the X.3 parameter is the value of not performing the flow control as mentioned in the above step S10, it does not need to perform the data flow control to the communication route any more, so that the data flow control is not performed to the communication route (S12). In this case, if BM 63 becomes the full state, the data must be annulled.

In the above step S9, when it is determined that the data flow control is performed by the MODEM control signals transferring between PAD 6 and MMD 5 through RTS/CTS, and when the unit 600 receives stop/start signals from MMD 5, the unit 600 controls PAD 6 as shown in Fig. 10(a). Fig. 10(b) is a flow chart showing how the unit 600 controls MMD 5 in response to the state of BM 63, either the full or the not-full state.

In Fig. 10(a), when the communication control unit 600 detects that the signal on CTS becomes OFF through SCN 617 (S21), the unit 600 judges that the OFF signal is a flow stop requirement from MMD 5 (S22), then the unit 600 outputs instructions to the transmitting data processing unit 651 that the unit 651 stops the transmit treatment (S23) performing. After that, when the unit 600 detects that the signal on CS becomes ON through SCN 617 (S24), the unit 600 outputs instructions to the transmitting data processing unit 651 so as to start the transmit treatment (S25).

On the other hand, in Fig. 10(b), when the communication control unit 600 detects that BM 63 becomes the full state (S31), the unit 600 outputs instructions to MMD 5 that the signal on RTS will become OFF (S32). When, after that, the unit 600 detects that BM 63 becomes the not-full state (S33), the unit 600 outputs to MMD 5 that the signal on RTS will become ON (S34).

In the above step S10 in Fig. 9, when it is determined that the data flow control is performed on the communication route in accordance with the character control, and after that when the communication control unit 600 receives characters of stop/restart of sending data from DTE, the flow chart becomes as shown in Fig. 11(a). Fig. 11(b) is a flow chart showing how the unit 600 controls DTE in response to the state of BM 63, either the full or the not-full state.

In Fig. 11(a), when the received data processing unit 652 receives DC3 which is the character for stopping data sending (S41), the unit 652 judges the DC3 as a control character and informs the judgement to the communication control unit 600 through INTERRUPT (S42). Then, the unit 600 sends instructions to the transmitting data processing unit 651 that the unit 651 stops sending data (S43).

After that, when the received data processing unit 652 receives DC1 which is a character for starting sending of data (S44), the unit 652 judges that DC1 is the control character and informs the judgement to the communication control unit 600 through INTERRUPT (S45). Then, the unit 600 sends instructions to the transmitting data processing unit 651 that the unit 651 restarts sending data (S46).

On the other hand, in Fig. 11(b), when the communication control unit 600 detects that BM 63 becomes the full state (S51), the unit 600 outputs DC3 to MMD 5 through the transmitting data processing unit 651 so as to stop MMD 5 sending data therefrom (S52). After that, when the unit 600 detects that BM 63 becomes the not-full state (S53), the unit 600 outputs DC1 to MMD 5 through the unit 651 so as to make MMD 5 start to send data therefrom (S54).

**Claims**

1. A packet communication system including a packet switching network and a telephone switching network operatively connected to each other, for performing data communication between each of data communication equipments connected to the packet switching network and each of data terminal equipments connected to the telephone switching network, said packet communication system comprising:
a communication line connecting the data terminal equipment and the packet switching network through the telephone switching network;
a first modulator and demodulator (first MODEM) provided on said communication line and connected to the data terminal equipment;
a first connecting line provided on said communication line, for connecting said first MODEM to the telephone switching network;
a second modulator and demodulator (second MODEM) provided on said communication line and connected to the packet switching network;
a second connecting line provided on said communication line, for connecting said second MODEM to the telephone switching network; and
a packet assembly and disassembly equipment (PAD) provided on said communication line and in the packet switching network and connected to said second MODEM, said PAD comprising:
a PAD buffer memory for storing data sent from the data terminal equipment so as to assembling the data to a packet in the packet switching network and for storing data obtained by disassembling packet data sent from the packet switching network;
a plurality of control means performing data flow control through said communication line in response to a plurality of control procedures; and
selecting means for selecting one of said control means in accordance with a judgement whether a designated response signal is in data transferred through said communication line, said designated response signal being a signal teaching that designated data flow control is performed on said communication line independently from the data flow control performed by said plurality of control means.

2. A packet communication system according to claim 1, wherein said plurality of control procedures used in said plurality of control means comprise a group of MODEM control signals transferred between said PAD and said second MODEM and a group of control characters transferred through said communication line with data transferred through said communication line.

3. A packet communication system according to claim 2, wherein said plurality of control means comprise first control means operating with said MODEM control signals and second control means operating with said control characters.

4. A packet communication system according to claim 3, wherein said selecting means selects said first control means when said first and second MODEMs are the same type having a buffer memory respectively and the designated data flow control is performed between said first and second MODEMs both having the buffer memory respectively, producing the designated response signal.

5. A packet communication system according to claim 3, wherein said selecting means selects said second control means when said first MODEM is a type having no buffer memory and no designated data flow control is performed on said communication line, producing no designated response signal.

6. A packet communication system according to claim 4, wherein said MODEM control signals are logic "1" and "0", said signal logic "1" being used to be sent from said first control means to said second MODEM for making said second MODEM send data to said PAD buffer memory when said PAD buffer memory is in a not-full state of stored data and used to be sent from said second MODEM to said first control means for making said first control means send data to said buffer memory of said second MODEM when said buffer memory in said second MODEM is in the not-full state, and said signal logic "0" being used to be sent from said first control means to said second MODEM for stopping said second MODEM sending data to said PAD buffer memory when said PAD buffer memory is in a full state of stored data and used to be sent from said second MODEM to said first control means for stopping said first control means sending data to said buffer memory when said buffer memory in said second MODEM is in the full state.

7. A packet communication system according to claim 5, wherein said control characters are DC1 and DC3 of X.3 recommended by CCITT, said DC1 being used to be sent from said second control means to the data terminal equipment for making the data terminal equipment send data to said PAD buffer memory when said PAD buffer memory is in a not-full state of stored data and said DC3 being used to be sent from said second control means to the data terminal equipment for stopping the data terminal equipment sending data to said PAD buffer memory when said PAD buffer memory is in a full state of stored data, and said DC1 being used to be sent from the data terminal equipment to said second control means for making said second control means send data to the data terminal equipment when a buffer memory of the data terminal equipment is in the not-full state and said DC3 being used to be sent from the data terminal equipment to said second control means for stopping said second control means sending data to the data terminal equipment when a buffer memory in said data terminal equipment is in the full state.

8. A packet communication system according to claim 6, wherein the designated response signal is a signal "/REL" in a signal CONNECT$\alpha\beta\gamma\delta$/REL.

9. A data flow control system for controlling data transferring in a packet communication system, the packet communication system including a plurality of data terminal equipments (DTEs), a first modulator and demodulator (MODEM) connected to the DTE, a telephone switching network (TSN), a packet switching network (PSN), a second MODEM connected to the PSN so as to be provided on a line connecting the TSN and the PSN and a plurality of data communication equipments connected to the PSN, the PSN including a packet assembly and disassembly equipment (PAD) so as to be connected to the second MODEM, the PAD including a buffer memory for storing data so as to form a packet of data, first data flow control means for controlling data transferring between the buffer memory and the second MODEM and second data flow control means for controlling data transferred between the buffer memory and the DTE, said system characterized in that the PAD has classified link discriminator means comprising:

analyzing means for analyzing whether a designated signal informing that data flow control is performed only between the first and second MODEMs independently from the data flow control performed due to the PAD, is in data sent from the DTE to the PAD; and

selecting means for selecting one of the first and second data flow control means in the PAD controlling the first data flow control means in the PAD, said selection being performed by making the first and the second data flow control means in the PAD effective and ineffective respectively when said designated signal is distinguished from the data and by making the first and the second data flow control means in the PAD ineffective and effective respectively when said designated signal is not distinguished from the data.

10. A flow control method of data transferred between one of data terminal equipments (DTEs) and a packet switching network (PSN) on a communication line through a first modulator and demodulator (MODEM) connected to the DTE, a telephone switching network (TSN) connected to the first MODEM and a second MODEM provided between the TSN and the PSN, the PSN including a packet assembly and disassembly equipment (PAD) placed so as to be directly connected to the second MODEM and provided for assembling and disassembling data transferred between the DTE and one of a plurality of data communication equipments connected to the PSN by using a buffer memory included in the PAD and for controlling flow of data being transferred between the DTE and the PSN through the communication line, the first MODEM having two types one of which is a type having a buffer memory and the other of which is a type having no buffer memory, the second MODEM being a type having a buffer memory, the first and second MODEMS being used for correcting error generated in data transferred through the TSN when the first and second MODEMs are the type having the buffer memory respectively, data being transferred between the first and second MODEMs under designated data flow control independently from the data flow control due to the PAD when the first and second MODEMs have the buffer memory respectively, said flow control method of data comprising the steps of:

(1) controlling flow of data transferred on the communication line through the second MODEM by MODEM control signals, said MODEM control signals being controlled by first flow control means provided in the PAD and by the second MODEM having the buffer memory;

(2) controlling flow of data transferred between the DTE and the PAD on the communication line by control characters, said control characters being transferred with data transferred between the DTE and the PAD and controlled by second flow control means provided in the PAD;

(3) separating data transferred with header signals between the DTE and the PAD, at the PAD;

(4) discriminating whether a designated response signal is included in said header signals separated at the PAD, at the PAD, said designated response signal being output from the second MODEM and sent to the PAD when the designated data flow control is performed between the first and second MODEMs;

(5) selecting said step (1) by making said first flow control means effective and said second flow control means ineffective when said designated response signal is discriminated from the header signals; and

(6) selecting said step (2) by making said first flow control means ineffective and said second flow control means effective when no designated response signal is discriminated from the header signals.

11. A flow control method according to claim 10 further comprising the step of controlling flow of data transferred between the DTE and the first MODEM, by the DTE and the first MODEM each other by using either one of a group of said MODEM control signals or a group of said control characters, said selection of the groups being performed by the DTE when the first MODEM has the buffer memory, said the DTE having a buffer memory.

12. A flow control method according to claim 11, wherein said designated response signal is a signal "/REL" in a signal CONNECT$\alpha\beta\gamma\delta$/REL.

13. A flow control method according to claim 11, wherein said MODEM control signals are logic "1" and "0" and said control characters are DC1 and DC2 in X.3 recommended by CCITT, said logic "1" being used so as to be sent from said first flow control means to the second MODEM for making the second MODEM send data to the PAD when the buffer memory in the PAD is in a not-full state of stored data and said logic "1" being used so as to be sent from the second MODEM to said first flow control means for making the PAD send data to the second MODEM when the buffer memory in the second MODEM is in the not-full state, said logic "0" being used so as to be sent from said first flow control means to the second MODEM for stopping the second MODEM sending data to the PAD when the buffer memory in the PAD is in a full state of stored data and said logic "0" being used so as to be sent from the second MODEM to said first flow control means for stopping the PAD sending data to the second MODEM when the buffer memory in the second MODEM is in the full state, said DC1 being used so as to be sent from said second flow control means to the DTE for making the DTE send data to the PAD when the buffer memory in the PAD is in the not-full state, said logic "0" being used so as to be sent from said second flow control means to the DTE for stopping the DTE sending data to the PAD when the buffer memory in the PAD is in the full state.

FIG. 1

RELATED ART

FIG. 2

FIG. 3 (a)

FIG. 3 (b)

FIG. 3 (c)

EP 0 418 812 A2

*FIG. 4*

FIG.5

FIG. 6 (a)

FIG. 6 (b)

RELATED ART

FIG. 7 (a)

FIG. 7 (b)

FIG.8

⟹ : Flow of DATA with CHARACTERS

→ : Flow of MODEM CONTROL SIGNALS and INTER CONNECTING

START

DET
CI "ON"     S1

INSTRUCT
DTR "ON"    S2

DET
DSR "ON"    S3

INSTRUCT
RTS "ON"    S4

DET
CTS "ON"    S5

TRANSMIT
ATA         S6

INFORM
CONNECT RECEIVE
BY INTERRUPT    S7

"/REC"    S8

NO

YES    S9

EXECUTE FLOW-CONT
BY RTS/CTS

END

X3
PARAMETER    S10

NO FLOW-CONT

YES FLOW-CONT

FLOW-CONT BY
DC1/DC3    S11

NO
FLOW/CONT    S12

END

INTERRUPT    S13

END

FIG.9

**FIG. 10 (a)**

START
↓ S21
DET
CTS "OFF"
↓ S22
COMM-CONT
RECOGNIZES
FLOW-CONT FROM
MODEM
↓ S23
COMM-CONT STOPS
TRANS-DATA PROC
SENDING DATA
↓ S24
DET
CTS "ON"
↓ S25
COMM-CONT MAKES
TRANS-DATA PROC
TO START SENDING
DATA
↓
END

**FIG. 10 (b)**

START
↓ S31
PAD BM
FULL STATE
↓ S32
COMM-CONT
INSTRUCTS
RTS "OFF"
↓ S33
PAD BM
NOT-FULL STATE
↓ S34
COMM-CONT
INSTRUCTS
RTS "ON"
↓
END

22

START

S41

RECEIVED
DC3

S42

REC-DATA PROC
RECOGNIZES
CHARACTER FLOW-CONT
AND INTERRUPTS
TO COMM-CONT

S43

COMM-CONT STOPS
TRANS-DATA PROC
SENDING DATA

S44

RECEIVE
DC1

S45

REC-DATA PROC
RECOGNIZES DC1
INFORMS TO
COMM-CONT

S46

COMM-CONT
MAKES TRANS-DATA
PROC START TO
SENDING DATA

END

FIG. 11 (a)

START

S51

PAD BM
FULL STATE

S52

COMM-CONT
SENDS DC3 TO
TRANS-DATA PROC

S53

PAD BM
NOT FULL STATE

S54

COMM-CONT
SENDS DC1 TO
TRANS-DATA PROC

END

FIG. 11 (b)